# EUROPEAN PATENT SPECIFICATION

(11) **EP 2 289 715 B1**
(45) Date of publication and mention of the grant of the patent: **17.05.2017**
(21) Application number: 10173701.3
(22) Date of filing: 23.08.2010
(51) Int. Cl.: B60C 23/04, B29D 30/00

(54) **Installing electronics in a tire**
Montage von Elektronik in einem Reifen
Assemblage des composants électroniques dans un pneu

(30) Priority: 24.08.2009 US 546333; 24.08.2009 US 546352
(43) Date of publication of application: 02.03.2011
(73) Proprietor: The Goodyear Tire & Rubber Company, Akron, OH 44316-0001 (US)
(72) Inventor: Shepler, Peter Ross, Stow, OH 44224 (US)
(74) Representative: Kutsch, Bernd

(56) References cited:
- EP-A2- 1 728 650
- WO-A1-99/29525
- DE-A1-102006 027 918
- US-A1- 2007 146 124

## Description

### Technical Field

The invention relates generally to the installation of electronics in a tire and, more specifically to a method for installing electronics into a post-cure finished tire. The invention also relates to a tire having a tire parameter measuring device attached hereto and, more specifically to a tire and electronic device assembly affixed to the tire a post-cure finished tire procedure.

### Background of the Invention

It is desirable in certain applications to install electronic device such as a pressure sensor into a tire for monitoring the air pressure within a tire cavity. The operation of the electronic device must be reliable and capable of withstanding the potentially damaging rigors of the installation procedure as well as tire operation.

US-A- 2007/0146124 describes a tire and electronic device assembly in accordance with the preamble of claim 1.

WO-A- 99/29525 describes a tire comprising an antenna composite which includes a transponder. The transponder is disposed under the center of the tread. The antenna composite is a preassembled package that includes antenna wire and a transponder circuit board encased in an isolating rubber.

### Summary of the Invention

The invention relates to an assembly in accordance with claim 1 and to a method in accordance with claim 5.

Dependent claims refer to preferred embodiments of the invention.

The electronic device is embedded into the cellular insert member between raised regions of the cellular insert member. The electronic device is preferably configured to have an outward surface exposed and uncovered by the cellular insert member at the pre-selected location and exposed and uncovered to the tire cavity with the sub-assembly attached to the inward facing tire surface at the operable location.

The inward facing tire surface is preferably located at the tire centerline and the cellular insert member preferably comprises an elongate foam strip dimensioned to attach to the inward facing tire surface along the tire centerline. The method according to the invention may include transporting the sub-assembly to the tire in a roll wherein the electronic device is situated in an accessible location proximate to a free end of the roll during transportation of the sub-assembly. The electronic device may be press inserted through a sized aperture within the insert member in the accessible location for transportation of the sub-assembly.

The cellular insert member may be configured as an elongate foam strip dimensioned to attach to the inward facing tire surface along the tire centerline. The electronic device may be press inserted through a sized aperture within the insert member.

### Definitions

"Axial" and "axially" means lines or directions that are parallel to the axis of rotation of the tire.

"Circumferential" means lines or directions extending along the perimeter of the surface of the annular tread perpendicular to the axial direction.

"Equatorial Centerplane (CP)" means the plane perpendicular to the tire's axis of rotation and passing through the center of the tread.

### Brief Description of the Drawings

The invention will be described by way of example and with reference to the accompanying drawings in which:
FIG. 1 is a perspective view of a prior art finished tire and electronics device assembly having a portion of the tire removed for the purpose of illustration;
FIG. 2 is a graph of car interior noise spectrum plotting frequency (Hz) against SPL dB (A).
FIG. 3 is a portion of a noise attenuation foam strip;
FIG. 4 is a perspective view of a portion of a finished tire having a foam insert attached thereto.
FIG. 5 is a graph of car interior noise spectrum with the foam insert sub-assembly affixed to the tire, plotting frequency (Hz) against SPL dB (A).
FIG. 6 is a schematic representation of a foam fitting machine.
FIG. 7 is a cross-sectional view through the foam insert member.
FIG. 8A is an enlarged view of a portion of the foam fitting machine of FIG. 6.
FIG. 8B is an enlarged view of a portion of the machine of FIG. 6 showing operation of the cutting and punch mechanisms.
FIG. 9 is a perspective view of an electronic device.
FIG. 10 is a schematic representation of a tire surface buffing machine and tire.
FIG. 11 is a schematic representation of an adhesive applicator machine and tire.
FIG. 12 is a sectional view of a tire taken through the crown region and showing the foam insert and electronic device affixed to the interior tire equatorial surface.
FIG. 13 is a sectional view of a tire taken through the crown region and showing an alternatively configured sub-assembly in which the electronic device is embedded within the foam insert.

### Detailed Description of the Invention

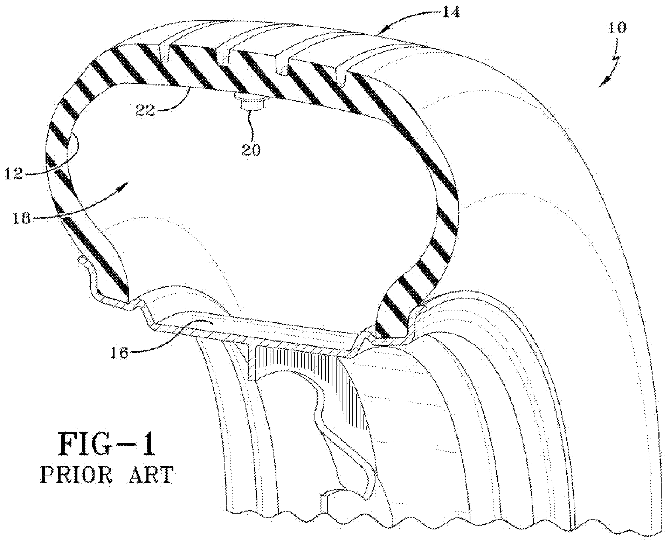

Referring initially to FIG. 1, a tire 10 is shown having an inner liner 12, a crown or tread region 14 mounted to a wheel rim 16. The inner liner defines a tire cavity 18. An electronic device 20 of a type commercially available is employed to monitor certain tire characteristics such as air pressure and temperature within the cavity 18. Such a device 20 may be mounted to the inner liner 12 on the equatorial centerplane of the tire as shown in FIG. 1 by adhesive or other suitable means. Locating the electronic device 20 on a cavity defining surface 22 beneath the tread region 14 serves to maintain attachment integrity between the device and the tire because such a location experiences relatively low flexing during tire use.

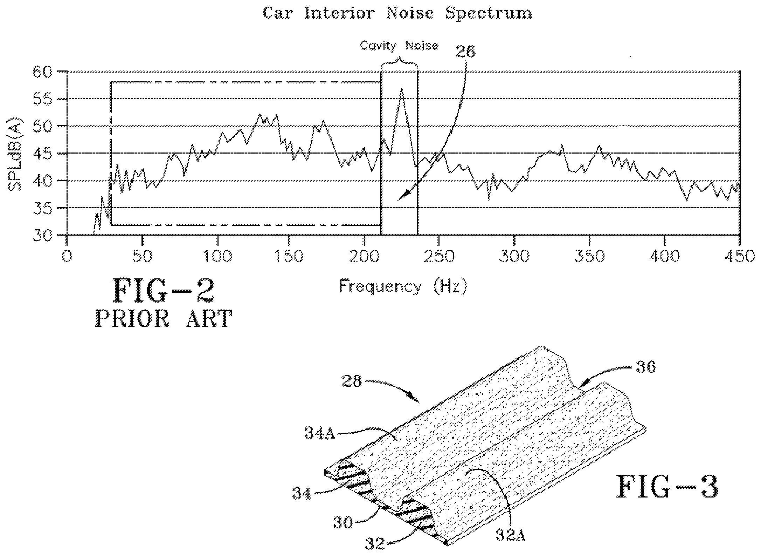

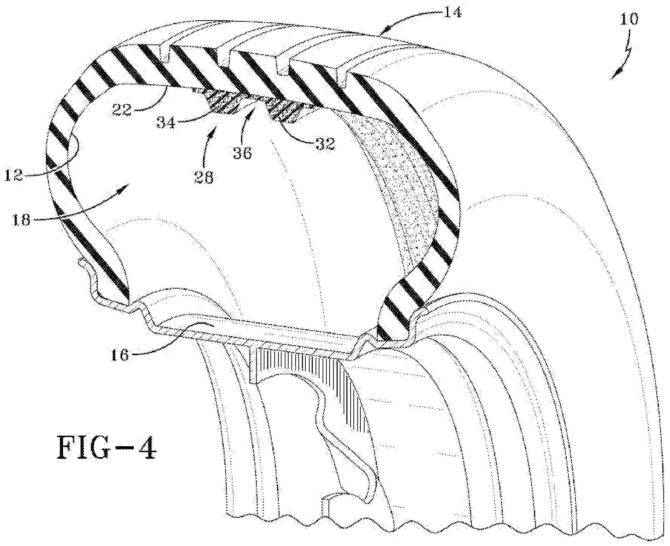

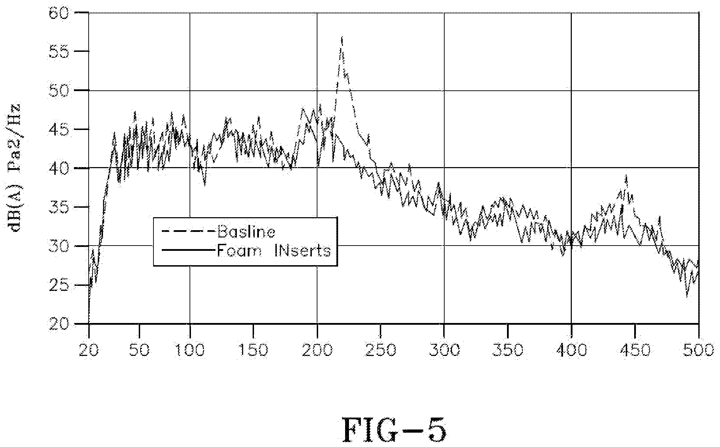

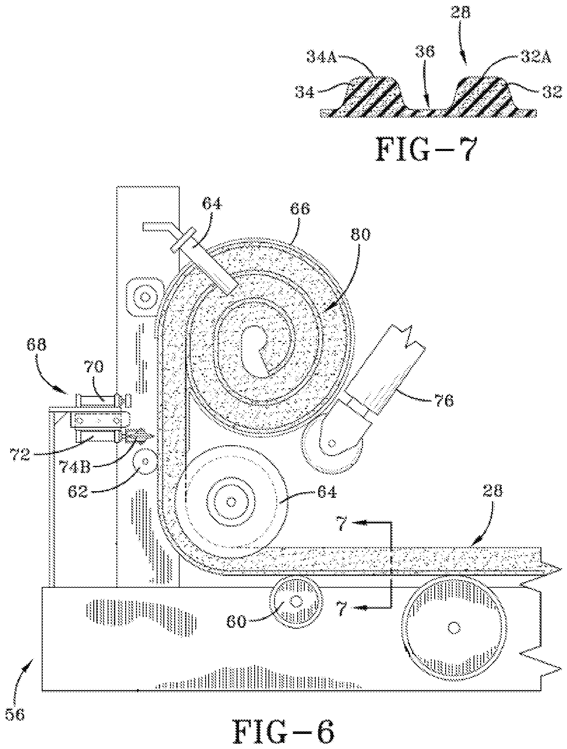

Cavity noise generated by the tire during normal operation is typically undesirable and it is an objective to reduce or minimize such noise. As shown by the spike 26 of the graph of FIG. 2, tire cavity noise generated by air resonance within the cavity contributes significantly to car interior noise within the frequency range identified. A cellular insert member 28 in the configuration shown in FIGS. 3 and 7 may be introduced within the cavity 18 to attenuate such noise. The cellular insert member 28 may be in the form of an elongate strip attached at an operable location to the tire cavity defining surface 22 on the centerline of the tire tread region as shown in FIG. 4 by adhesive application. So positioned, the strip or insert member 28 (used herein interchangeably) attenuates air resonance induced noise within the tire cavity. The result is an improved decrease in noise as indicated in the graph of FIG. 5.

The foam insert or strip 28 is of cellular construction and composed of commonly available cellular material or materials such as polyurethane. The insert 28 is geometrically configured to have a flat base portion 30 with separated raised regions 32, 34 extending outward from the base 30 to region top extremities 32A, 34A, respectively. In section, the strip 28 is of M-shape with a bight opening 36 between the raised regions 32, 34 extending to a bight floor.

With reference to FIGS. 4, 12, and 13, the electronic device 20 is packaged within a protective shell having an large circular base 40, a cylindrical container body 42 extending outward from the base 40 and terminating at an outward facing circular surface 44. Electronics packaged within the body 42 may include a temperature sensor and/or air pressure measuring sensors that communicate through access portals within the surface 44 to measure tire parameters within a tire cavity.

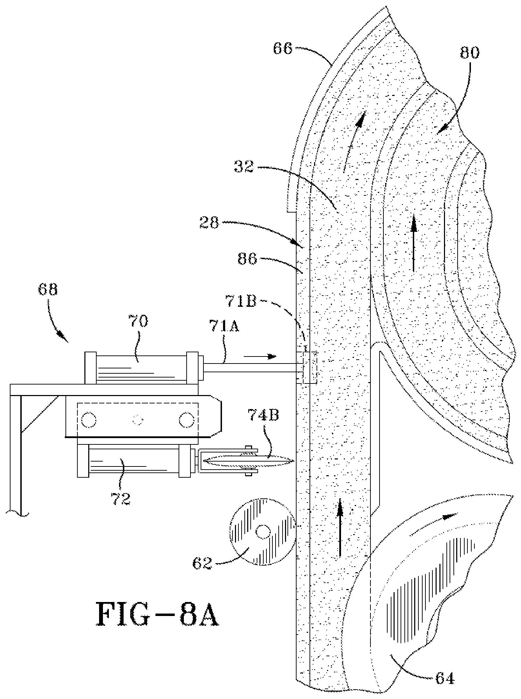

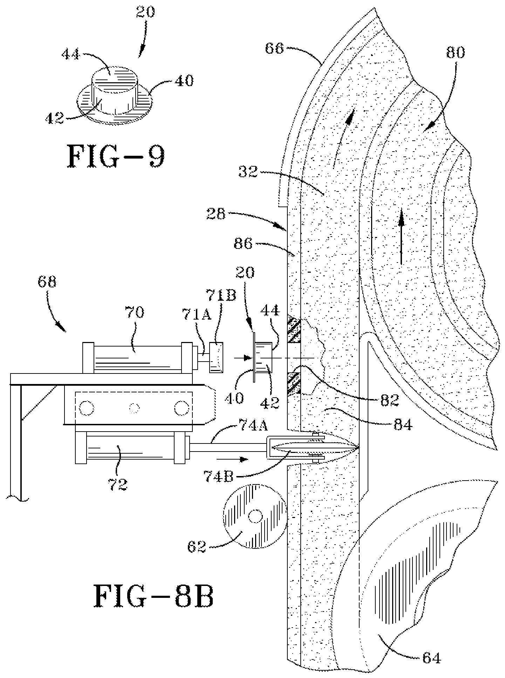

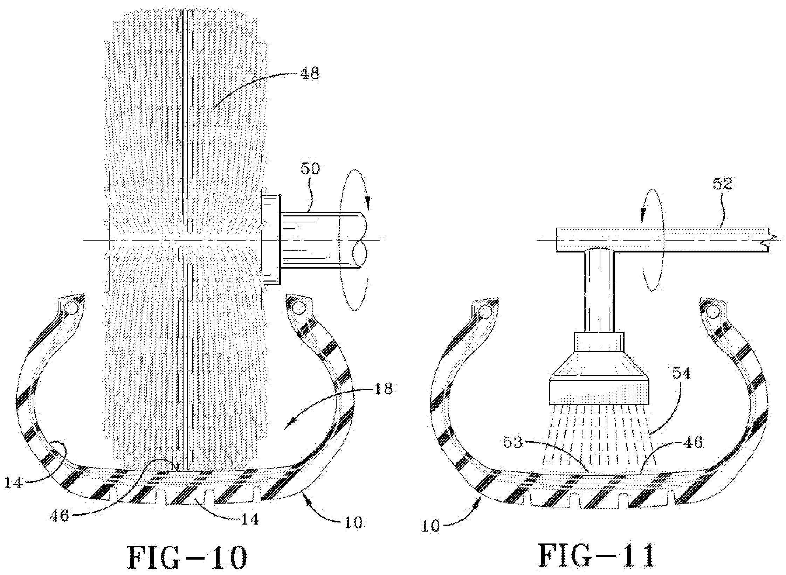

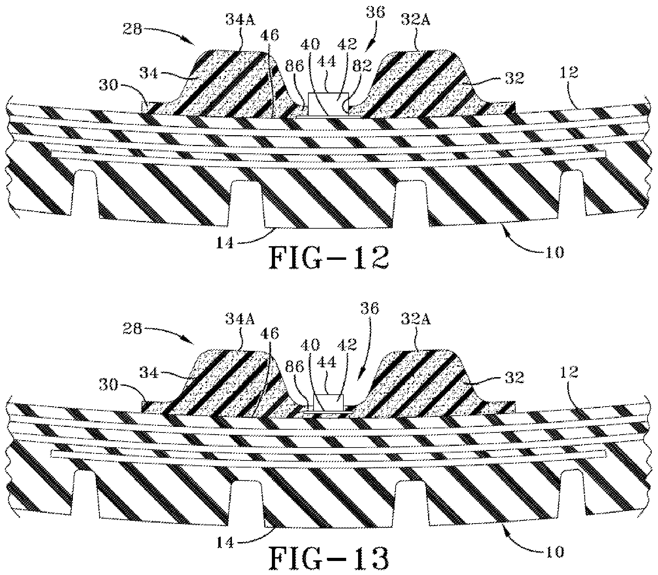

The electronic device 20 and the insert member 28 are preferably combined to create a sub-assembly which is then secured to a cavity defining surface 46 on the centerline of a tire at the crown as shown in FIG. 12 or, alternatively, FIG. 13. To prepare the tire surface 46, a buffing wheel 48 rotated by shaft 50 is employed as shown in FIG. 10. The wheel 48 contacts and abrades the surface 46 along the centerline of the tire. Thereafter, an adhesive layer 53 is applied to the surface 46 by targeted adhesive spray 54 from an applicator 52 as shown by FIG. 11. The tire 10 is thus prepared for receipt and attachment to the insert member/electronic component subassembly in a post-cure procedure. The sub-assembly is constructed as will be explained with reference to FIGS. 6, 8A, and 8B.

As referenced herein, a "sub-assembly" is created by the attachment of an electronic device 20 to the cellular insert 28. As explained previously, the insert 28 is preferably in strip form having contoured raised portions 32, 34 that define a bight recess or valley 36 therebetween within which the electronic device 20 is attached and situated. The strip insert 20 is of cellular or foam construction so as to provide noise attention within the cavity of the tire to which the sub-assembly is attached. As seen from FIGS. 6, 8A, and 8B, the assembly of the electronic device 20 and foam insert 28 occurs at a foam fitting machine station 56. The foam strip 28 is fed by means of feed rollers 60, 62, and roller guide 64 into a circular forming shell 66. The foam strip 28 thus assumes a spiral roll 80 for readily facilitating transportation between the machine 56 and an insert to tire assembly station. The fitting machine 56 includes a pneumatic or hydraulic powered cutter and punch mechanism 68 mounted adjacent to the foam insert feed path as shown. The cutter and punch mechanism 68 includes a punch 70 having a reciprocating actuator arm 71 A and a cylindrical punch die 71 B mounted to the remote end of arm 71 A. The movement of the arm 71 A is generally perpendicular to the path of travel of the foam strip 28 prior to the strip 28 entering the forming shell 66.

A cutter mechanism 72 is mounted adjacent to the punch mechanism 68 and includes a reciprocating actuator rod 74A having a rotary cutting blade 74B mounted to a forward end. A tensioning arm 76 is positioned adjacent to the forming shell 66 and engages the shell to compress the shell against the foam insert strip 28 in the roll configuration 80.

The operation of the punch and cutting mechanisms 70, 72 will be appreciated from FIGS. 8A and 8B. The length of foam strip 28 is formed into the roll configuration 80 and is sized in length to coincide with the circumferential dimension of the tire centerline onto which the insert is to be mounted. The punch mechanism is actuated to move into engagement with a free end 84 of insert foam strip 28. The punch head 71 B is sized to create a sized aperture 82 through the base 86 of the strip 28 at the free end 84 of the strip 28; the aperture 82 being generally configured to conform to and complement the dimension and shape of the body 42 of the electronic device 20. The cylindrical external geometry of the device body 42 closely fits with interference within the complementary shape and size of the aperture 82. After the aperture 82 is created, the electronic device body 42 is press fit inserted through the aperture 82 with the device exposed surface 44 thus positioned between raised insert regions 32, 34. The device 20 thus forms with the insert strip 28 a sub-assembly for transport to the station designated for assembly of the sub-assembly to a tire. The device is protected by the foam strip 28 during transportation and operational use as will be appreciated from FIGS. 12 and 13.

The insert strip 28 in the roll configuration 80 is cut to the desired length by operation of the cutting mechanism 72. Blade 74B is moved axially inward by the rod 74A and severs through the strip 28 at the appropriate point. The roll 80 may be carried to the tire assembly station within the forming shell 66 with the electronic device 20 carried by and secured to the free strip end 84 of the roll 80.

FIGS. 12 and 13 illustrate alternative means for attaching the electronic device to the cellular insert strip. In FIG. 12, the electronic device 20 remains within the aperture 82 as described above in reference to FIGS. 8A and 8B. The insertion of the device 20 through the aperture 82 with interference places the larger diameter base flange 40 of the device 20 against the flat underside of the strip base 86. The sub-assembly is unrolled along the centerline of the tire inner liner 12 beneath the crown or tread 14 and is attached to the cavity defining inner liner centerline surface 46 by adhesive. The adhesive may be selectively applied to the target surface 46 as shown in FIG. 11. So positioned, the outward surface 44 of the electronic device 20 is uncovered and exposed so that the internal air pressure within cavity 18 of the tire may be measured by a pressure sensor within device 20 through a passageway (not shown) extending through surface 44 of the device 20. Moreover, it will be appreciated that the device 20 is recessed a distance from the extremities 32A and 34A of the raised portions 32, 34. The device 20 and the electronics housed therein are thereby protected by the cellular insert strip raised portions 32, 34 from potentially damaging contact during use within the tire cavity. If desired, the electronic device 20 may be removed temporarily at the point of installation of the sub-assembly to the tire and adhesive applied to the aperture 82 of the strip. The device 20 may thereafter be re-inserted into the aperture 82 and retained therein by the friction fit as well as the applied adhesive. The attachment of the sub-assembly is preferably to a post-cure tire.

An alternative means for affixing the device 20 to the insert cellular strip 28 is shown in FIG. 13. As depicted, the larger diameter flange 40 of the device 40 may be embedded within the base layer 86 of the strip 28 by forming the strip around the device 20. Embedding the flange 40 secures the device 20 to the strip without the need for adhesive application. The position of the device 20 is the same in FIG. 13 and in FIG. 12; that is, between and recessed relative to the raised regions 32, 34 of the strip 28. Protection of the device 20 from external contact is thereby enhanced by its location between the raised regions. The outward surface 44, as in the attachment means shown by FIG. 12, remains uncovered by the foam strip 28 and in a position to allow sensors within the device 20 to operably measure tire parameters within the tire cavity.

The method for installing the electronic device 20 to the tire 10 will be seen to include: affixing the electronic device 20 to a cellular insert member 28 at a pre-selected location to create a sub-assembly. The insert member has an inward surface shown as the underside of base 86 configured to attach to an inward facing tire surface 46 partially defining the tire cavity 18. The sub-assembly is accordingly attached to the inward facing tire surface 46 at an operable location from which to monitor tire parameters such as temperature and pressure within the tire.

The electronic device 20 may be embedded into the cellular insert member as shown by FIG. 13 or affixed as shown in FIG. 12 between raised regions 32, 34 of the cellular insert member 28. The electronic device 20 may be configured to have one or more passageways (not shown) extending through an outward surface 44 to facilitate sensor measurement. The surface 44 preferably remains exposed and uncovered by the cellular insert member at a pre-selected location so as not to obstruct passageway(s) extending through the surface 44. The inward facing tire surface 46 is preferably located at the tire centerline and the cellular insert member is shaped as an elongate foam strip dimensioned to attach to the inward facing tire surface 46 along the tire centerline. The method of use may include transporting the sub-assembly to the tire in a roll with the electronic device 20 situated in an accessible location proximate to a free end 84 of the roll during transportation of the sub-assembly. The electronic device may be press inserted through a sized aperture 82 within the free end 84 of the insert member 28 for transportation of the sub-assembly to a tire. By locating the device 20 in the free end 84, the device 20 does not interfere with the formation of roll 80 and may be readily removed at the tire for application of adhesive to the aperture 82.

A tire and electronic device assembly is disclosed, the electronic device measuring one or more tire parameters. The electronic device attaches to a cellular insert member to create a sub-assembly, the insert member having an inward surface attached on a centerline of the tire to an inward facing tire surface defining a tire cavity. The electronic device attaches to the cellular insert member between raised regions of the cellular insert member with an outward surface of the device uncovered and exposed and recessed below outward boundaries of the raised regions.

The electronic device 20 may be either embedded into the cellular insert member between raised regions of the cellular insert member 28 or press inserted through the member 28. Adhesive may further be employed to secure the attachment between the device 20 and the insert strip 28. The cellular insert member 28 may be configured as an elongate foam strip dimensioned to attach to the inward facing tire surface 46 along the tire centerline.

## Claims

1. A tire and electronic device assembly, the tire (10) having a cavity (18) defined by an tire inner surface (46) and the electronic device (20) comprising at least one sensor for monitoring at least one tire parameter, the assembly comprising a foam strip insert member (28) having a radially outward surface attached against an inward facing tire inner surface region, wherein, in a cross sectional view parallel to the axial direction of the tire, a the foam strip member (28) having raised regions (32, 34) defining a recess (36) therebetween, wherein the electronic device (20) is attached to the foam strip member (28) within the recess (30) between the raised regions (32, 34), wherein the electronic device (20) comprises lateral sides (42) and an outward surface (44) exposed and uncovered by the foam strip insert member (28) within the recess (36), **characterized in that** in said cross sectional view the outward exposed surface (44) of the electronic device (20) is radially recessed and offset from raised extremities (32A, 34A) of the raised regions (32, 34) of the foam strip insert member (28) and **in that** in said cross-sectional view the lateral sides (42) of the electronic device (20) are axially offset from the raised extremities (32A, 34A) of the raised regions (32, 34) of the foam strip insert member (28).

2. The assembly of claim 1, wherein a base portion (40) of the electronic device (20) is situated within the recess (36) and embedded within the foam strip insert member (28).

3. The assembly of claim 1 or 2, wherein the electronic device (20) press fit through a sized aperture (82) within the foam strip insert member (28) and with lateral sides (42) of the electronic device (20) positioned adjacent the raised regions (32, 34) of the foam strip insert member (28).

4. The assembly of at least one of the previous claims, wherein the inward facing tire surface is located at the tire centerline and the foam strip insert member (28) comprises an elongate foam strip dimensioned to attach to the inward facing tire surface along the tire centerline.

5. A method of providing a tire and electronic device assembly in accordance with one of the previous claims, the method comprising affixing an electronic device (20) to a foam strip insert member (28) at a pre-selected location to create a sub-assembly, the foam strip member having an outward surface configured for attachment against an inward facing tire surface defining a tire cavity (18), and attaching the sub-assembly to the inward facing tire surface (46) at an operable location creating the tire and electronic device assembly.

6. The method of claim 5, further comprising press fit inverting the electronic device (20) through a sized aperture (86) in the foam strip insert member (28) at the pre-selected location prior to attaching the subassembly to the inward facing tire surface (46).

7. The method of at least one of the claims 5 to 6, wherein the foam strip insert member (28) comprises an elongate foam strip and wherein the method further comprises configuring the insert member (28) into a roll (80) wherein the electronic device (20) is situated proximate to a free end of the roll at the pre-selected location during a transportation of the subassembly.

8. The method of at least one of the claims 5 to 7 further comprising transporting the sub-assembly to the tire (10) in a roll wherein the electronic device (20) in the pre-selected location is situated proximate to a free end of the roll during transportation of the sub-assembly.

## Patentansprüche

1. Reifen- und Elektronikvorrichtungsbaugruppe, wobei der Reifen (10) einen durch eine innere Reifenoberfläche (46) definierten Hohlraum (18) aufweist und die Elektronikvorrichtung (20) mindestens einen Sensor zur Überwachung mindestens eines Reifenparameters umfasst, wobei die Baugruppe ein Schaumstoffstreifeneinsatzelement (28) umfasst, wovon eine radial auswärts befindliche Oberfläche an einem einwärts gerichteten inneren Reifenflächenbereich befestigt ist, wobei, in einer Querschnittsansicht parallel zur axialen Richtung des Reifens, das Schaumstoffstreifenelement (28) erhabene Bereiche (32, 34) aufweist, die dazwischen eine Ausnehmung (36) definieren, wobei die Elektronikvorrichtung (20) an dem Schaumstoffstreifenelement (28) in der Ausnehmung (30) zwischen den erhabenen Bereichen (32, 34) befestigt ist, wobei die Elektronikvorrichtung (20) laterale Seiten (42) und eine auswärts befindliche Oberfläche (44), die freiliegend und unbedeckt von dem Schaumstoffstreifeneinsatzelement (28) in der Ausnehmung (36) ist, umfasst, **dadurch gekennzeichnet, dass** in der Querschnittsansicht die auswärts freiliegende Oberfläche (44) der Elektronikvorrichtung (20) radial versenkt und versetzt von erhabenen Enden (32A, 34A) der erhabenen Bereiche (32, 34) des Schaumstoffstreifeneinsatzelements (28) ist und dass in der Querschnittsansicht die lateralen Seiten (42) der Elektronikvorrichtung (20) axial versetzt von den erhabenen Enden (32A, 34A) der erhabenen Bereiche (32,34) des Schaumstoffstreifeneinsatzelements (28) sind.

2. Baugruppe nach Anspruch 1, wobei ein Basisteil (40) der Elektronikvorrichtung (20) sich in der Ausnehmung (36) und eingebettet in dem Schaumstoffstreifeneinsatzelement (28) befindet.

3. Baugruppe nach Anspruch 1 oder 2, wobei die Elektronikvorrichtung (20) mit Presspassung durch eine entsprechend dimensionierte Öffnung (82) in dem Schaumstoffstreifeneinsatzelement (28) und mit lateralen Seiten (42) der Elektronikvorrichtung (20) benachbart zu den erhabenen Bereichen (32, 34) des Schaumstoffstreifeneinsatzelements (28) positioniert ist.

4. Baugruppe nach mindestens einem der vorhergehenden Ansprüche, wobei die einwärts gerichtete Reifenfläche sich an der Reifenmittellinie befindet und das Schaumstoffstreifeneinsatzelement (28) einen länglichen Schaumstoffstreifen umfasst, der zur Befestigung an der einwärts gerichteten Reifenfläche entlang der Reifenmittellinie dimensioniert ist.

5. Verfahren zur Bereitstellung einer Reifen- und Elektronikvorrichtungsbaugruppe nach einem der vorhergehenden Ansprüche, wobei das Verfahren das Befestigen einer Elektronikvorrichtung (20) an einem Schaumstoffstreifeneinsatzelement (28) an einer vorausgewählten Stelle zur Erzeugung einer Unterbaugruppe umfasst, wobei das Schaumstoffstreifenelement eine auswärts befindliche Fläche aufweist, die zur Befestigung an einer einwärts gerichteten Reifenfläche, die einen Reifenhohlraum (18) definiert, gestaltet ist; und das Befestigen der Unterbaugruppe an der einwärts gerichteten Reifenfläche (46) an einer einsatzfähigen Stelle und dadurch Erzeugen der Reifen- und Elektronikvorrichtungsbaugruppe.

6. Verfahren nach Anspruch 5, weiter das mittels Presspassung Einsetzen der Elektronikvorrichtung (20) durch eine entsprechend dimensionierte Öffnung (86) in dem Schaumstoffstreifenelement (28) an der vorausgewählten Stelle vor dem Befestigen der Unterbaugruppe an der einwärts gerichteten Reifenfläche (46) umfassend.

7. Verfahren nach mindestens einem der Ansprüche 5 bis 6, wobei das Schaumstoffstreifeneinsatzelement (28) einen länglichen Schaumstoffstreifen umfasst und wobei das Verfahren weiter das zu einer Rolle (80) Formen des Einsatzelements (28) umfasst, wobei die Elektronikvorrichtung (20) sich während eines Transportierens der Unterbaugruppe benachbart zu einem freien Ende der Rolle an der vorausgewählten Stelle befindet.

8. Verfahren nach mindestens einem der Ansprüche 5 bis 7, weiter das Transportieren der Unterbaugruppe in Form einer Rolle zu dem Reifen (10) umfassend, wobei die Elektronikvorrichtung (20) an der vorausgewählten Stelle sich während des Transportierens der Unterbaugruppe benachbart zu einem freien Ende der Rolle befindet.

## Revendications

1. Assemblage d'un bandage pneumatique et d'un dispositif électronique, le bandage pneumatique (10) possédant une cavité (18) définie par une surface interne (46) du bandage pneumatique et le dispositif électronique (20) comprenant au moins un capteur pour surveiller au moins un paramètre du bandage pneumatique, l'assemblage comprenant un élément (28) faisant office d'insert sous la forme d'une bande en mousse possédant une surface externe en direction radiale attachée à une zone de la surface interne du bandage pneumatique, tournée vers l'intérieur, dans lequel, dans une vue en coupe transversale, parallèlement à la direction axiale du bandage pneumatique, l'élément (28) sous la forme d'une bande en mousse possède des zones surélevées (32, 34) définissant un évidement (36) entre elles, dans lequel le dispositif électronique (20) est fixé à l'élément (28) sous la forme d'une bande en mousse au sein de l'évidement (30) entre les zones surélevées (32, 34), dans lequel le dispositif électronique (20) comprend des côtés latéraux (42) et une surface externe (44) exposée et non recouverte par l'élément (28) faisant office d'insert sous la forme d'une bande en mousse au sein de l'évidement (36), **caractérisé en ce que**, dans ladite vue en coupe transversale, la surface externe exposée (44) du dispositif électronique (20) est renfoncée en direction radiale et décalée par rapport aux extrémités surélevées (32A, 34A) des zones surélevées (32, 34) de l'élément (28) faisant office d'insert sous la forme d'une bande en mousse, et **en ce que**, dans ladite vue en coupe transversale, les côtés latéraux (42) du dispositif électronique (20) sont décalés en direction axiale par rapport aux extrémités surélevées (32A, 34A) des zones surélevées (32, 34) de l'élément (28) faisant office d'insert sous la forme d'une bande en mousse.

2. Assemblage selon la revendication 1, dans lequel une portion de base (40) du dispositif électronique (20) est située au sein de l'évidement (36) et est incorporée au sein de l'élément (28) faisant office d'insert sous la forme d'une bande en mousse.

3. Assemblage selon la revendication 1 ou 2, dans lequel le dispositif électronique (20) vient se disposer via un ajustage serré à travers un orifice dimensionné (82) au sein de l'élément (28) faisant office d'insert sous la forme d'une bande en mousse, les côtés latéraux (42) du dispositif électronique (20) venant se disposer en position adjacente aux zones surélevées de l'élément (28) faisant office d'insert sous la forme d'une bande en mousse.

4. Assemblage selon au moins une des revendications précédentes, dans lequel la surface du bandage pneumatique orientée vers l'intérieur est disposée sur l'axe central du bandage pneumatique et l'élément (28) faisant office d'insert sous la forme d'une bande en mousse comprend une bande allongée en mousse qui est dimensionnée pour venir se fixer sur la surface du bandage pneumatique, orientée vers l'intérieur le long de l'axe central du bandage pneumatique.

5. Procédé de procuration d'un assemblage de bandage pneumatique et d'un dispositif électronique selon l'une quelconque des revendications précédentes, le procédé comprenant le fait de fixer un dispositif électronique (20) à un élément (28) faisant office d'insert sous la forme d'une bande en mousse à un endroit présélectionné afin de créer un sous-assemblage, l'élément sous la forme d'une bande en mousse comprenant une surface externe configurée pour pouvoir venir se fixer à une surface du bandage pneumatique orientée vers l'intérieur, définissant une cavité de bandage pneumatique (18), et le fait de fixer le sous-assemblage à la surface du bandage pneumatique (46) orientée vers l'intérieur à un endroit opérationnel, afin d'obtenir l'assemblage du bandage pneumatique et du dispositif électronique.

6. Procédé selon la revendication 5, comprenant en outre le fait d'insérer par ajustage serré le dispositif électronique (20) à travers un orifice dimensionné (86) dans l'élément (28) faisant office d'insert sous la forme d'une bande en mousse à l'endroit présélectionné avant de fixer le sous-assemblage à la surface (46) du bandage pneumatique, orientée vers l'intérieur.

7. Procédé selon au moins une des revendications 5 à 6, dans lequel l'élément (28) faisant office d'insert sous la forme d'une bande en mousse comprend une bande allongée en mousse, et dans lequel le procédé comprend en outre le fait de configurer l'élément (28) faisant office d'insert pour obtenir un rouleau (80), le dispositif électronique (20) étant situé à proximité d'une extrémité libre du rouleau à l'endroit présélectionné au cours du transport du sous-assemblage.

8. Procédé selon au moins une des revendications 5 à 7, comprenant en outre le fait de transporter le sous-assemblage au bandage pneumatique (10) sous la forme d'un rouleau, dans lequel le dispositif électronique (20) à l'endroit présélectionné est situé à proximité d'une extrémité libre du rouleau au cours du transport du sous-assemblage.
